# EUROPÄISCHE PATENTSCHRIFT

(11) **EP 3 386 702 B1**
(45) Veröffentlichungstag und Bekanntmachung des Hinweises auf die Patenterteilung: **06.11.2019**
(21) Anmeldenummer: 16769977.6
(22) Anmeldetag: 19.09.2016
(51) Int. Cl.: B29B 7/18, B29B 7/24, B29B 7/74, B29B 7/88, B29B 7/82

(54) **VORRICHTUNG ZUR HERSTELLUNG EINER ZUMINDEST EINEN REAKTIVEN ZUSATZSTOFF ENTHALTENDEN KAUTSCHUKFERTIGMISCHUNG**
DEVICE FOR PRODUCING A RUBBER FINISH MIXTURE WHICH CONTAINS AT LEAST ONE REACTIVE ADDITIVE
DISPOSITIF POUR LA FABRICATION D'UN MÉLANGE FINI DE CAOUTCHOUC CONTENANT AU MOINS UN ADDITIF RÉACTIF

(30) Priorität: 10.12.2015 DE 102015224798
(43) Veröffentlichungstag der Anmeldung: 17.10.2018
(73) Patentinhaber: Continental Reifen Deutschland GmbH, 30165 Hannover (DE)
(72) Erfinder: STEINER, Frank Stefan, 30167 Hannover (DE); DETTMER, Fabian, 38106 Braunschweig (DE)
(74) Vertreter: Widjaja, Wira
(86) Internationale Anmeldenummer: PCT/EP2016/072145
(87) Internationale Veröffentlichungsnummer: WO 2017/097452

(56) Entgegenhaltungen:
- EP-A1- 0 530 557
- EP-A1- 0 616 877
- EP-A2- 0 277 558
- EP-B1- 0 618 055
- DE-C1- 4 342 115
- PETER J ET AL: "TANDEM-MISCHVERFAHREN. TEIL 5: EINSATZ BEI TECHNISCHEN GUMMIWAREN. TANDEM MIXING. PART 5: APPLICATION TO TECHNICAL RUBBER GOODS", KAUTSCHUK GUMMI KUNSTSTOFFE, HÜTHIG VERLAG, HEIDELBERG, DE, Bd. 47, Nr. 9, 1. September 1994 (1994-09-01), Seiten 666-671, XP000444726, ISSN: 0948-3276
- Bogun, Martin: "Untersuchungen zur kontinuierlichen Herstellung von Kautschukmischungen basierend auf Rubber/Filler-Composites am Doppelschneckenextruder", Dissertation, Martin-Luther-Universität Halle-Wittenberg , 29. September 2005 (2005-09-29), Seiten 7-32, XP002763350, Halle (Saale) Gefunden im Internet: URL:https://sundoc.bibliothek.uni-halle.de /diss-online/05/06H001/t3.pdf [gefunden am 2016-10-24]

## Beschreibung

Die Erfindung betrifft eine Vorrichtung zur Herstellung einer zumindest einen reaktiven Zusatzstoffe enthaltenden Kautschukfertigmischung mit einem Tandemmischer mit einer eine obere Mischkammer aufweisenden Obermaschine und einer eine untere Mischkammer aufweisenden Untermaschine, wobei die untere Mischkammer größer ist als die obere Mischkammer und in jeder Mischkammer Rotoren angeordnet sind, wobei eine Beladeeinheit vorgesehen ist, mittels welcher über einen Beladeschacht Mischungskomponenten in die untere Mischkammer aufgebbar sind.

Es ist bekannt und üblich, Kautschukmischungen über mindestens zwei Mischstufen, dem Grundmischen und dem Fertigmischen, herzustellen. Während der Herstellung der Grundmischung werden alle Komponenten der Kautschukmischung, wie Kautschuke, Füllstoffe, Verarbeitungshilfsmittel, Alterungsschutzmittel, Ozonschutzmittel und weitere übliche Zusatzstoffe mit Ausnahme der Vernetzungschemikalien miteinander unter Energieeintrag vermischt. Nach der Fertigstellung der Grundmischung, deren Abkühlung und eventuellen Lagerung werden zur Herstellung der Kautschukfertigmischung die Vernetzungschemikalien bei geringerer Temperatur eingemischt.

Üblicherweise werden Kautschukmischungen unabhängig von ihrem vorgesehenen Anwendungsbereich in Tandemmischer gemischt, welche, wie beispielsweise aus der EP 0 472 931 A1 bekannt, eine eine obere Mischkammer umfassende Obermaschine und eine eine untere Mischkammer umfassende Untermaschine aufweisen, wobei die untere Mischkammer größer ist als die obere Mischkammer und in jeder Mischkammer Rotoren angeordnet sind. Verschiedene Verfahren zur Herstellung von Grund- als auch von Fertigmischungen mittels Tandemmischer sind beispielsweise aus der DE 44 07 144 A1, der EP 1 213 110 B1 oder der EP 0 618 055 B1 bekannt. Weitere Informationen zu Tandemmischern sind beispielsweise der Zeitschrift "KAUTSCHUK GUMMI KUNSTSTOFFE", Hüthig Verlag, Heidelberg, DE, Vol. 47, Nr. 9, 1994-09-01, Seiten 666 bis 671, XP 000 444 726, entnehmbar.

Bei der Herstellung von nicht reaktiven Kautschukmischungen, also jenen Kautschukmischungen, bei denen keine chemischen Reaktionen im Zuge der Mischungsherstellung ablaufen sollen, ermöglichen Tandemmischer eine Kopplung von Grund- und Fertigmischverfahren durch gezieltes Abkühlen der in der Obermaschine gefertigten Grundmischung sowie durch die Zufuhr der typischen Vernetzungschemikalien in die Mischkammer der Untermaschine zum Fertigmischen.

Unter den reaktiven Mischungen besitzen die kieselsäurehaltigen Kautschukmischungen aufgrund ihrer Anwendung in modernen Kraftfahrzeugreifen eine herausragende Bedeutung. Bei der Herstellung solcher Kautschukmischungen ist zu üblich, zur Verbesserung der Verarbeitbarkeit der Kautschukmischung und zur Anbindung der polaren Kieselsäure an unpolare Kautschuke sogenannte Kupplungsagenzien einzusetzen, welche mit den polaren Gruppen des Kieselsäure reagieren und die Anbindung an den Kautschuk ermöglichen. Solche Kupplungsagenzien sind beispielsweise bifunktionelle Organosilane, die am Siliciumatom mindestens eine Alkoxy-, Cycloalkoxy- oder Phenoxygruppe als Abgangsgruppe besitzen und die als weitere Funktionalität eine Gruppe aufweisen, die gegebenenfalls nach Spaltung eine chemische Reaktion mit den Doppelbindungen des Polymers eingehen kann.

Obwohl es üblich ist, die Mischkammer der Untermaschine gegenüber der Mischkammer der Obermaschine mit größerem Volumen auszulegen, werden die Kautschukmischungen in der Mischkammer der Untermaschine aktuell nur relativ langsam abgekühlt, sodass sich die Mischzeit erheblich verlängert und der Durchsatz deutlich limitiert ist. Aktuell erfordert die durchzuführende Einwaage der jeweiligen Mischungskomponenten derart viel Zeit, dass der Durchsatz durch den Tandemmischer und damit auch die Produktivität limitiert sind.

Der Erfindung liegt daher die Aufgabe zugrunde, eine Vorrichtung der eingangs genannten Art zur Verfügung zu stellen, mittels welcher ein zumindest einen reaktiven Zusatzstoff enthaltende Kautschukmischung mit einem höheren Durchsatz als bisher gemischt werden kann.

Was die Vorrichtung betrifft, wird die gestellte Aufgabe erfindungsgemäß dadurch gelöst, dass die Beladeeinheit zumindest zwei Dosiereinrichtungen, zumindest eine einer Dosiereinrichtung vorgeschaltete Schneid- oder Vorwärmeinheit und ein zum Beladeschacht führendes erstes Förderband aufweist, wobei die eine Dosiereinrichtung eine erste Fördereinheit zum Transport von Mischungskomponenten zum ersten Förderband und die andere Dosiereinrichtung eine zweite Fördereinheit zum Transport von Mischungskomponenten zu einem zum ersten Förderband führenden zweiten Förderband aufweist, wobei sämtliche Förderbänder automatisch an- und abschaltbar sind, sodass eingewogene Mischungskomponenten auf ihnen in einer "Warteposition" haltbar sind.

Mittels der zwei vorgesehenen Dosiereinrichtungen können mehrere Mischungskomponenten simultan eingewogen werden. Die vorgeschaltete Schneid- oder Vorwärmeinheit ermöglicht es, etwaigen Kautschuk zu zerkleinern bzw. vorzuwärmen, sodass dieser in gewünschter Temperatur und Konsistenz in der unteren Mischkammer vorgelegt werden kann, was ein effektive Abkühlung der Grundmischung gewährleistet. Dadurch dass die Mischungskomponenten in "Wartepositionen" haltbar sind, können beispielsweise auf der einen Dosiereinrichtung Kupplungsagenzien sowie nachfolgend Vernetzungschemikalien eingewogen werden, während auf der andern Dosiereinrichtung beispielsweise weitere zur Herstellung der Grundmischung erforderliche Mischungskomponenten sowie der vorzulegende Kautschuk eingewogen werden. Dank der Vorlage von Kautschuk weist die fertige Grundmischung unmittelbar nach ihrer Fertigstellung eine ideale Mischtemperatur zum Fertigmischen auf, sodass die auf einem der Förderbänder bereits in "Warteposition" befindlichen eingewogenen Vernetzungschemikalien sofort zur fertigen Grundmischung zugegeben werden können. Die erfindungsgemäße Beladeeinheit trägt daher maßgeblich zu einer Durchsatzsteigerung durch den Tandemmischer bei, da die Einwaagezeiten der Mischungskomponenten den Durchsatz nicht länger limitieren.

Überraschenderweise hat sich gezeigt, dass mittels der erfindungsgemäßen Vorrichtung auch reaktive Kautschukmischungen, bei welchen chemische Reaktionen im Zuge der Mischungsherstellung ablaufen, auf einem Tandemmischer, welcher eine Kopplung von Grund- und Fertigmischverfahren gestattet, gemischt werden können. Die erfindungsgemäße Vorrichtung ermöglicht es, durch gezieltes Abkühlen der in der Obermaschine gefertigten Grundmischung sowie durch die Zudosierung der typischen Vernetzungschemikalien sowie weiterer Mischungskomponenten in die Mischkammer der Untermaschine eine Fertigmischung herzustellen.

Bevorzugter Weise ist die Beladeeinheit derart ausgelegt, dass insgesamt Mischungskomponenten in einer Menge, welche bis zu 75%, insbesondere 5% bis 40%, der Masse der Kautschukfertigmischung entspricht, hinzufügbar sind. Es kann daher ein Großteil des Mischvorganges in der größeren unteren Mischkammer durchgeführt werden, sodass die optimale Temperatur zum Fertigmischen schneller als bisher erreicht wird, sodass der Durchsatz zusätzlich gesteigert werden kann.

Bei einer bevorzugten Ausführungsvariante sind die Fördereinheiten der Dosiereinrichtungen sowie die Förderbänder mittels einer oder mehrerer Lichtschranke(n) betreibbar, d.h. anhaltbar und wieder in Gang setzbar.

Bevorzugter Weise weisen die Fördereinheiten der Dosiereinrichtungen jeweils ein Förderband auf.

Weitere Merkmale, Vorteile und Einzelheiten der Erfindung werden im Folgenden anhand eines Ausführungsbeispiels näher beschrieben. Dabei zeigt
Fig. 1 eine vereinfachte schematische Darstellung einer Vorrichtung zur Herstellung einer Kautschukfertigmischung und
Fig. 2 ein Beispiel einer Mischkurve für einen mit der Vorrichtung aus Fig. 1 durchgeführten Mischvorgang.

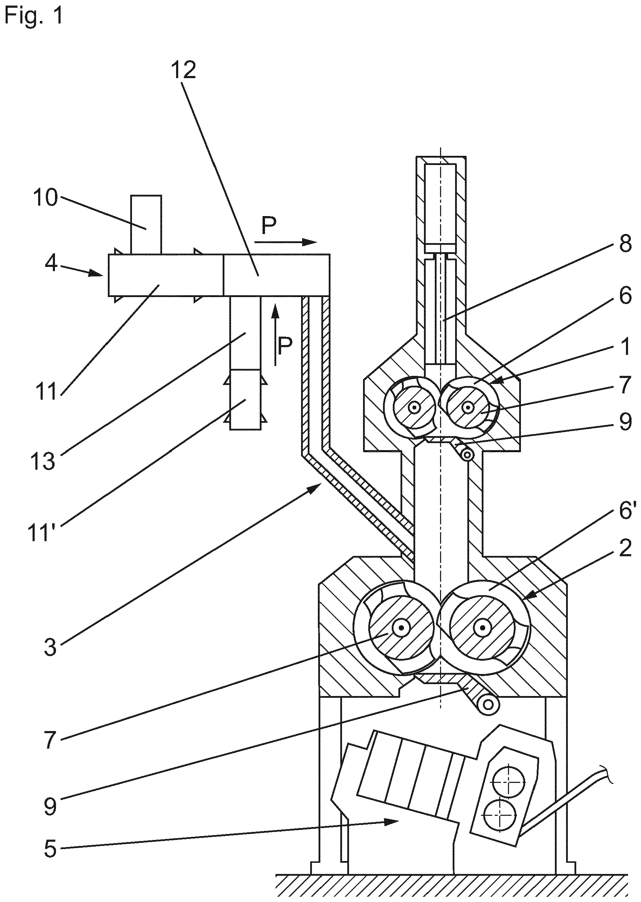

Die in Fig. 1 gezeigte Vorrichtung umfasst einen Tandemmischer, welcher eine Obermaschine 1, eine Untermaschine 2 und einen Beladeschacht 3 aufweist, sowie eine Beladeeinheit 4. Unterhalb des Tandemmischers ist ein Ausformaggregat 5, wie beispielsweise ein Walzwerk oder ein "Twin-Screw-Rollerheadextruder", angeordnet.

Die Obermaschine 1 weist eine obere Mischkammer 6, die Untermaschine 2 eine untere Mischkammer 6' auf, wobei die untere Mischkammer 6' größer als die obere Mischkammer 6 ausgeführt ist und in jeder Mischkammer 6, 6' zwei in an sich bekannter Weise ausgeführte Rotoren 7 angeordnet sind. Die Obermaschine 1 weist ferner einen oberhalb der oberen Mischkammer 6 angeordneten druckbeaufschlagten Stempel 8 auf, welcher in an sich bekannter Weise auf- und abbewegbar ist. In Fig. 1 befindet sich der Stempel 8 in seiner heruntergefahrenen Position, in welcher in der oberen Mischkammer 6 befindliches Mischgut zu den entsprechenden Rotoren 7 gedrückt werden kann.

Jede Mischkammer 6, 6' weist eine schwenkbare Entladeklappe 9 auf. Durch Öffnen der Entladeklappe 9 der oberen Mischkammer 6 kann Mischgut aus der oberen Mischkammer 6 in die untere Mischkammer 6' übergeführt werden. Durch Öffnen der Entladeklappe 9 der unteren Mischkammer 6' wird das Mischgut auf das Ausformaggregat 5 aufgebracht und anschließend mittels diesem auf die gewünschte Dicke gewalzt. Die gewalzte Kautschukmischung wird je nach Einsatzzweck weiterverarbeitet, wobei die Kautschukmischung beispielsweise zur nachfolgenden Fertigung eines Laufstreifens eines Fahrzeugluftreifens in an sich bekannter Weise bahnförmig extrudiert wird.

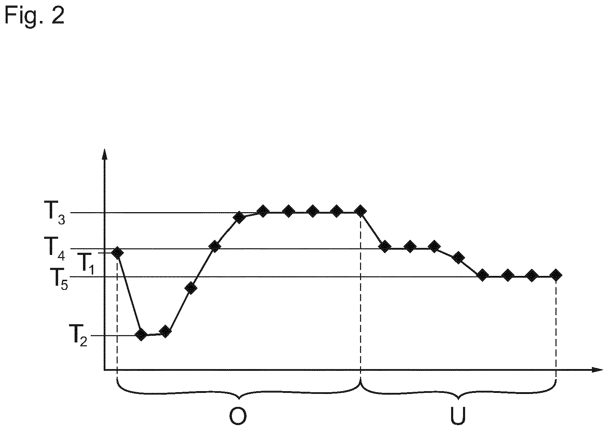

Die in Fig. 2 dargestellte Mischkurve zeigt exemplarisch den zeitlichen Verlauf der Mischtemperatur (Temperatur in der jeweiligen Mischkammer 6, 6') für den das Grundmischen und das Fertigmischen umfassenden Mischvorgang einer Charge, wobei die Mischtemperatur auf der Abszissenachse und die Mischzeit auf der Ordinatenachse aufgetragen sind. Der in der Mischkurve mit "O" bezeichnete Abschnitt ist jener Teil des Mischvorganges, welcher in der oberen Mischkammer 6 stattfindet, der mit "U" bezeichnet Abschnitt kennzeichnet den in der unteren Mischkammer 6' stattfindenden Teil des Mischvorganges.

Das Grundmischen der Kautschukmischung erfolgt, wie nachfolgend erläutert wird, zum Teil in der oberen Mischkammer 6 und zum Teil in der unteren Mischkammer 6', das Fertigmischen erfolgt in der unteren Mischkammer 6'. Mittels der Beladeeinheit 4 können über den Beladeschacht 3 Mischungskomponenten in die untere Mischkammer 6' aufgegeben werden.

Im Zuge des Grundmischens werden die für die jeweilige Kautschukmischung vorgesehenen Kautschukkomponenten und Füllstoffe, insbesondere Ruße und/oder Kieselsäuren (Silica), in insbesondere in an sich bekannter Weise in die obere Mischkammer 6 aufgegeben. Die Temperatur (T₁) in der oberen Mischkammer 6 beträgt im Allgemeinen 60°C bis 150°C, wobei die Temperatur T₁ insbesondere davon abhängt wie lange der zuletzt durchgeführte Mischvorgang zurückliegt. Nach Herunterfahren des Stempels 8 werden die aufgegebenen Mischungskomponenten durch die bereits laufenden Rotoren 7 miteinander vermischt. Wie die Mischkurve in Fig. 2 zeigt, nimmt die Mischtemperatur zu Beginn des Mischvorganges kontinuierlich auf eine Mischtemperatur T₂ von beispielsweise zirka 60°C ab (Abschnitt O). Die Drehzahl der Rotoren 7 der Obermaschine 1 ist derart gewählt, dass die über die Rotoren 7 in das Mischgut eingetragenen Scherkräfte einen Anstieg auf eine Mischtemperatur T₃ von 120°C bis 200°C bewirken. Die Mischtemperatur T₃ sowie der dieser zugrundeliegende Energieeintrag durch die Rotoren 7 gewährleisten eine optimale Einmischung, d.h. Verteilung (Dispergierung), der Füllstoffe in die Kautschukkomponenten. Ferner ist die Mischtemperatur T₃ ideal zur Durchführung von Siliansierungsreaktionen der Kieselsäuren geeignet.

Nach Einmischen der Füllstoffe wird das Mischgut in die untere Mischkammer 6' übergeführt und es werden weitere Mischungskomponenten, zu welchen insbesondere Weichmacher, Verarbeitungswirkstoffe, Alterungsschutzmittel, Ozonschutzwachs, Zinkoxid und Stearinsäure zählen, über den Beladeschacht 3 zum Mischgut hinzugefügt und es wird die Grundmischung hergestellt. Zum Fertigmischen werden die Vernetzungschemikalien, welche vorzugsweise Schwefel und zumindest einen Beschleuniger umfassen, hinzugefügt. Vorzugsweise wird die Drehzahl der Rotoren 7' unmittelbar vor oder unmittelbar nach der Zugabe der weiteren Mischungskomponenten reduziert, wobei die gute Dispergierbarkeit der weiteren Mischungskomponenten eine hohe Mischgüte sicherstellt. Das Einmischen der weiteren Mischungskomponenten bei gleichzeitiger Reduktion der Drehzahl der Rotoren 7' ist von Vorteil, da dies die Reduktion der Mischtemperatur beschleunigt (Mischtemperatur T₄).

Zum Fertigmischen des Mischgutes ist es erforderlich, die Mischtemperatur auf einen Wert T₅ < T₄ zu reduzieren, sodass eine vorzeitige Vernetzung nach Zugabe der Vernetzungschemikalien verhindert wird. Zu diesem Zweck ist es beispielsweise von Vorteil, vor der Überführung des Mischgutes aus der oberen Mischkammer 6 in die untere Mischkammer 6' in der unteren Mischkammer 6' temperaturbeständige Mischungskomponenten vorzulegen. Beispielsweise kann ein in der jeweiligen Kautschukgrundmischung vorgesehener Kautschuk oder ein bereits Schwefel enthaltendes Kautschukpulver oder dergleichen vorgelegt werden. Ferner kann der Kautschuk gemeinsam mit Schwefel oder der Kautschuk gemeinsam mit Ozonschutzwachs oder einer anderen im Kautschuk gut verteilbaren Mischungskomponente in der unteren Mischkammer 6' vorvermischt werden ("pre-batch"). Diese Vorgehensweisen begünstigt die nachfolgende Abkühlung des Mischgutes in der unteren Mischkammer 6'.

Die Vorlage temperaturbeständiger Mischungskomponenten sowie die Zugabe der weiteren Mischungskomponenten und der Vernetzungschemikalien erfolgt mittels der speziellen Beladeeinheit 4 über den Beladeschacht 3, wobei insgesamt Mischungskomponenten in einer Menge hinzugefügt werden, welche bis zu 75%, insbesondere 5% bis 40%, der Masse der Kautschukfertigmischung entspricht.

Die in Fig. 1 schematisch dargestellte Beladeeinheit 4 weist eine Schneid- oder Vorwärmeinheit 10, zwei Dosiereinrichtungen 11, 11', ein zum Beladeschacht 3 führendes Förderband 12 und ein von der Dosiereinrichtung 11' zum Förderband 12 führendes Förderband 13 auf. Die Transportrichtungen der beiden Förderbänder 12, 13 sind jeweils durch einen Pfeil P gekennzeichnet. Die Dosiereinrichtungen 11, 11' weisen ebenfalls jeweils eine, insbesondere ein Förderband umfassende, Fördereinheit auf, sodass über die Dosiereinrichtungen 11, 11' eingewogene Mischungskomponenten zu den Förderbändern 12, 13 transportierbar sind.

Die für die jeweilige Kautschukmischung vorgesehenen Mischungskomponenten werden gegebenenfalls mittels der vor der Dosiereinrichtung 11 angeordneten Schneid- oder Vorwärmeinheit 10 zerkleinert und/oder erwärmt und anschließend auf der Dosiereinrichtung 11 verwogen. Die jeweils gewünschten Mengen werden zum Förderband 12, nachfolgend zum Beladeschacht 3 und über diesen in die untere Mischkammer 6' befördert. Die Vernetzungschemikalien werden auf der zweiten Dosiereinrichtung 11' eingewogen und können anschließend über das Förderband 13 zum Förderband 12 und nachfolgend in die untere Mischkammer 6' befördert werden.

Die Förderbänder 12, 13 werden bei Bedarf automatisch angehalten. Wird beispielsweise eine erste Charge in der unteren Mischkammer 6' fertiggemischt, während in der oberen Mischkammer 6 die Grundmischung einer zweiten Charge gemischt wird, können die für die zweite Charge zum Fertigmischen erforderlichen Mischungskomponenten sowie etwaige vorzulegende temperaturbeständige Mischungskomponenten eingewogen sowie gegebenenfalls zugeschnitten bzw. vorgewärmt und auf das Förderband 12 transportiert werden. Das Förderband 12 wird angehalten, sodass sich die jeweiligen Mischungskomponenten kurzzeitig in einer Warteposition befinden. Ist die in der unteren Mischkammer 6' befindliche erste Charge fertiggemischt, wird diese auf das Ausformaggregat 5 aufgebracht. Etwaige vorzulegende Mischungskomponenten werden in die untere Mischkammer 6 aufgegeben und vermischt. Nachfolgend wird die in der oberen Mischkammer 6 befindliche zweite Charge in die untere Mischkammer 6' übergeführt und zu dieser die bereits vorbereiteten, auf dem Transportband 12 befindlichen Mischungskomponenten über den Beladeschacht 3 hinzugefügt. Die zweite Charge kann daher unmittelbar nach ihrer Übergabe in die untere Mischkammer 6' effektiv abgekühlt und anschließend fertiggemischt werden, sodass eine besonders zügiger Ablauf des chargenweisen Mischvorganges sichergestellt ist und dementsprechend die Produktivität steigt. Die Steuerung der Förderbänder 12, 13 erfolgt vorzugsweise mittels einer oder mehrerer Lichtschranke(n), welche für ein entsprechendes Anhalten und in Gang setzten der Förderbänder 12, 13 sorgt bzw. sorgen.

### Bezugsziffernliste

- 1: Obermaschine
- 2: Untermaschine
- 3: Beladeschacht
- 4: Beladeeinheit
- 5: Ausformaggregat
- 6, 6': Mischkammer
- 7: Rotor
- 8: Stempel
- 9: Entladeklappe
- 10: Schneid- oder Vorwärmeinheit
- 11, 11': Dosiereinrichtung
- 12, 13: Förderband
- P: Transportrichtung

## Patentansprüche

1. Vorrichtung zur Herstellung einer zumindest einen reaktiven Zusatzstoffe enthaltenden Kautschukfertigmischung mit einem Tandemmischer mit einer eine obere Mischkammer (6) aufweisenden Obermaschine (1) und einer eine untere Mischkammer (6') aufweisenden Untermaschine (2), wobei die untere Mischkammer (6') größer ist als die obere Mischkammer (6) und in jeder Mischkammer (6, 6') Rotoren (7) angeordnet sind, wobei eine Beladeeinheit (4) vorgesehen ist, mittels welcher über einen Beladeschacht (3) Mischungskomponenten in die untere Mischkammer (6') aufgebbar sind,
**dadurch gekennzeichnet,**
**dass** die Beladeeinheit (4) zumindest zwei Dosiereinrichtungen (11, 11'), zumindest eine einer Dosiereinrichtung (11, 11') vorgeschaltete Schneid- oder Vorwärmeinheit (10) und ein zum Beladeschacht (3) führendes erstes Förderband (12) aufweist, wobei die eine Dosiereinrichtung (11) eine erste Fördereinheit zum Transport von Mischungskomponenten zum ersten Förderband (12) und die andere Dosiereinrichtung (11') eine zweite Fördereinheit zum Transport von Mischungskomponenten zu einem zum ersten Förderband (12) führenden zweiten Förderband (13) aufweist, wobei sämtliche Förderbänder (12, 13) automatisch an- und abschaltbar sind, sodass eingewogene Mischungskomponenten auf ihnen in einer "Warteposition" haltbar sind.

2. Vorrichtung nach Anspruch 1, **dadurch gekennzeichnet, dass** mittels der Beladeeinheit (4) insgesamt Mischungskomponenten in einer Menge, welche bis zu 75%, insbesondere 5% bis 40%, der Masse der Kautschukfertigmischung entspricht, hinzufügbar sind.

3. Vorrichtung nach Anspruch 1 oder 2, **dadurch gekennzeichnet, dass** die Fördereinheiten der Dosiereinrichtungen (11, 11') sowie die Förderbänder (12, 13) mittels einer oder mehrerer Lichtschranke(n) betreibbar, d.h. anhaltbar und wieder in Gang setzbar, sind.

4. Vorrichtung nach Anspruch 1 oder 3, **dadurch gekennzeichnet, dass** die Fördereinheiten der Dosiereinrichtungen (11, 11') jeweils ein Förderband aufweisen.

## Claims

1. Apparatus for production of a finished rubber mixture comprising at least one reactive additive, comprising a tandem mixer with an upper machine (1) having an upper mixing chamber (6) and a lower machine (2) having a lower mixing chamber (6'), where the lower mixing chamber (6') is larger than the upper mixing chamber (6) and there are rotors (7) disposed in each mixing chamber (6, 6'), where a loading unit (4) by means of which mixture components can be introduced into the lower mixing chamber (6') via a loading shaft (3) has been provided,
**characterized in that**
the loading unit (4) has at least two metering devices (11, 11'), at least one cutting or preheating unit (10) connected upstream of a metering device (11, 11') and a first conveyor belt (12) that leads to the loading shaft (3), where one metering device (11) has a first conveying unit for transport of mixture components to the first conveyor belt (12) and the other metering device (11') has a second conveying unit for transport of mixture components to a second conveyor belt (13) that leads to the first conveyor belt (12), where all conveyor belts (12, 13) can be switched on and off automatically, such that mixture components weighed in can be held in a "wait position" thereon.

2. Apparatus according to Claim 1, **characterized in that** mixture components can be added overall by means of the loading unit (4) in an amount corresponding to up to 75%, especially 5% to 40%, of the mass of the finished rubber mixture.

3. Apparatus according to Claim 1 or 2, **characterized in that** the conveying units of the metering devices (11, 11') and the conveyor belts (12, 13) are operable, i.e. stoppable and restartable, by means of one or more light barrier(s).

4. Apparatus according to Claim 1 or 3, **characterized in that** the conveying units of the metering devices (11, 11') each have a conveyor belt.

## Revendications

1. Dispositif pour la fabrication d'un mélange fini de caoutchouc contenant au moins un additif réactif à l'aide d'un mélangeur tandem comprenant une machine supérieure (1) comprenant une chambre de mélange supérieure (6) et une machine inférieure (2) comprenant une chambre de mélange inférieure (6'), la chambre de mélange inférieure (6') étant plus grande que la chambre de mélange supérieure (6), et des rotors (7) étant agencés dans chaque chambre de mélange (6, 6'), une unité de chargement (4) étant prévue, au moyen de laquelle des composants de mélange peuvent être introduits dans la chambre de mélange inférieure (6') via une gaine de chargement (3), **caractérisé en ce que** l'unité de chargement (4) comprend au moins deux dispositifs d'ajout (11, 11'), au moins une unité de découpe ou de préchauffage (10) disposée en amont d'un dispositif d'ajout (11, 11'), et une première bande de transport (12) conduisant à la gaine de chargement (3), un dispositif d'ajout (11) comprenant une première unité de transport pour le transport de composants de mélange vers la première bande de transport (12) et l'autre dispositif d'ajout (11') comprenant une deuxième unité de transport pour le transport de composants de mélange vers une deuxième bande de transport (13) conduisant vers la première bande de transport (12), l'ensemble des bandes de transport (12, 13) pouvant être démarrées et arrêtées automatiquement, de telle sorte que des composants de mélange pesés puissent être maintenus sur celles-ci à une « position d'attente ».

2. Dispositif selon la revendication 1, **caractérisé en ce que** des composants de mélange peuvent être ajoutés au total en une quantité qui peut correspondre à jusqu'à 75 %, notamment 5 % à 40 %, de la masse du mélange fini de caoutchouc, au moyen de l'unité de chargement (4).

3. Dispositif selon la revendication 1 ou 2, **caractérisé en ce que** les unités de transport des dispositifs d'ajout (11, 11'), ainsi que les bandes de transport (12, 13), peuvent être actionnées, c.-à-d. arrêtées et remises en marche, au moyen d'une ou de plusieurs barrières lumineuses.

4. Dispositif selon la revendication 1 ou 3, **caractérisé en ce que** les unités de transport des dispositifs d'ajout (11, 11') comprennent chacune une bande de transport.
